# EUROPÄISCHE PATENTSCHRIFT

(11) **EP 1 460 383 B1**
(45) Veröffentlichungstag und Bekanntmachung des Hinweises auf die Patenterteilung: **22.04.2009**
(21) Anmeldenummer: 04004505.6
(22) Anmeldetag: 27.02.2004
(51) Int. Cl.: G01C 21/26

(54) **Kameravorrichtung für ein Fahrzeug**
Camera system for a vehicle
Système de caméra pour un véhicule

(30) Priorität: 21.03.2003 DE 10312546
(43) Veröffentlichungstag der Anmeldung: 22.09.2004
(73) Patentinhaber: AUDI AG, 85045 Ingolstadt (DE)
(72) Erfinder: Popken, Markus, 85139 Wettstetten (DE); Lübcke, Michael, 85049 Ingolstadt (DE)
(74) Vertreter: Thielmann, Frank

(56) Entgegenhaltungen:
- EP-A- 1 211 132
- WO-A-02/36389
- DE-A1- 19 736 774
- DE-A1- 19 938 266

## Beschreibung

Die vorliegende Erfindung betrifft eine Kameravorrichtung für ein Fahrzeug, insbesondere eine Kameravorrichtung für ein Fahrzeug mittels derer ein Teil der Fahrzeugumgebung erfasst werden kann.

In modernen Fahrzeugen, insbesondere Kraftfahrzeugen, ist es bekannt, Kameras einzusetzen, um beispielsweise den Straßenverlauf zu erfassen. Dies kann insbesondere bei schlechten Sichtverhältnissen, wie beispielsweise bei Nacht oder bei Nebel von Nutzen sein. Weiterhin werden Kameras an Fahrzeugen angebracht, um Objekte, wie beispielsweise voranfahrende Kraftfahrzeuge, oder Markierungen auf der Straße wahrnehmen zu können. Diese Informationen können für die Steuerung spezieller Fahrerassistenzsysteme eingesetzt werden. Die Anforderung, die an solche Kameras an Fahrzeugen gestellt werden muss, ist, dass diese sowohl dem Straßenverlauf als auch beispielsweise der Geschwindigkeit des Fahrzeugs Rechnung tragen müssen.

Um eine fortwährende Erfassung des vorausliegenden Straßenverlaufs zu ermöglichen, wird in der deutschen Offenlegungsschrift DE 199 50 033 A1 eine Kameravorrichtung für Fahrzeuge vorgeschlagen, die eine variabel ausrichtbare Kamera zur Erfassung eines vor einem Fahrzeug liegenden Straßenverlaufs aufweist. Die Ausrichtung der Kamera erfolgt gemäß dieser Patentanmeldung durch ein Steuergerät, das fahrdynamische Parameter des Fahrzeugs und/oder eine satellitengestützte Information über den aktuellen Standort des Fahrzeugs, den Verlauf und/oder die örtliche Lage der Straße erhält. Das Steuergerät steuert eine mechanische Vorrichtung, wie beispielsweise eine bewegbare Plattform, an und ermöglicht somit ein Schwenken der Kamera.

Der Nachteil dieser bekannten Kameravorrichtung liegt darin, dass die Kamera über ein mechanisches Gelenk in ihrer Ausrichtung verändert werden muss. Ein solches mechanisches Gelenk ist zum einen anfällig bezüglich Beschädigungen bzw. Verschleiß und kann darüber hinaus eine Veränderung der Kameraposition nur mit einer gewissen zeitlichen Verzögerung durchführen, die durch die mechanische Positionsänderung hervorgerufen wird. Darüber hinaus kann eine solche Kamera in einem bestimmten Zeitpunkt nur Daten erfassen, die für ein entsprechendes Fahrerassistenzsystem geeignet sind.

Aus der WO 02/36389 ist ein an einem Fahrzeug angeordnetes Nachtsichtsystem bekannt, das eine Kamera zum Aufnehmen von Infrarotbildern vor dem Fahrzeug, eine elektronische Verarbeitungseinheit, ein Display zum Anzeigen von Bildern, eine Kontrolleinheit zum Steuern der Kamera in Abhängigkeit von einem oder mehreren Fahrparametern und einem oder mehreren Sensoren zum Aufnehmen der Fahrparameter umfasst. Abhängig von Geschwindigkeit und Lenkrichtung des Fahrzeugs werden dem Fahrer, zur Unterstützung bei Nachtfahrten, ausgewählte Bildausschnitte der Fahrzeugumgebung auf dem Display angezeigt.

Aus der DE 197 36 774 A1 ist ein Verfahren zum Anzeigen von Informationen in einem Fahrzeug bekannt, wobei auf einer Anzeigeeinheit ein Ausschnitt des Bildes einer Kamera angezeigt wird, das nach Auswertung durch eine Steuer- und Auswerteeinheit ein Verkehrszeichen enthält. Das Bild wird dem Fahrer lediglich angezeigt, ohne dass eine Auswertung nach dem Inhalt des Verkehrszeichens und eine Klassifikation erfolgt.

Aus der DE 199 38 266 A1 ist ein an einem Fahrzeug angeordnetes System zur Erkennung von Verkehrszeichen bekannt, wobei das Verkehrszeichen mit einer am Fahrzeug angeordneten Kamera erfasst und mit einem Mustererkennungsverfahren klassifiziert wird. Abhängig davon, ob die Erkennung zweifelsfrei war oder nicht, kann das Klassifizierungsergebnis direkt auf die Fahrzeugregelung einwirken oder das dazugehörende Bild dem Fahrer in einem Display angezeigt oder das Erkennungsverfahren unter Hinzunehmen zusätzlicher Mitteln fortgesetzt werden.

Die Aufgabe der vorliegenden Erfindung ist es, eine Kameravorrichtung zu schaffen, die insbesondere einen einfachen Aufbau aufweist und weiterhin für unterschiedliche Verwendungen flexibel eingesetzt werden kann.

Diese Aufgabe wird erfindungsgemäß gelöst durch eine Kameravorrichtung für Fahrzeuge umfassend eine Kamera zur Erfassung von Bilddaten eines Teils der Fahrzeugumgebung, eine Verarbeitungseinheit zum Verarbeiten der Bilddaten und mindestens ein Fahrerassistenzsystem, wobei die Kamera feststehend an dem Kraftfahrzeug befestigt ist und mindestens ein Fahrerassistenzsystem zum Austausch von Informationen mit der Verarbeitungseinheit verbunden ist, wobei die Informationen von der Kamera erfasste und von der Verarbeitungseinheit verarbeitete Bilddaten umfassen und die Verarbeitungseinheit Informationen von dem damit verbundenen Fahrerassistenzsystem, die die Art des Fahrerassistenzsystems angeben, empfängt.

Durch das Vorsehen einer feststehenden Kamera an dem Kraftfahrzeug werden die Probleme, die im Stand der Technik durch die Gelenke hervorgerufen werden, ausgeschlossen. In der erfindungsgemäßen Kameravorrichtung ist weiterhin vorgesehen, dass die Verarbeitungseinheit mit dem Fahrerassistenzsystem für einen Austausch von Informationen verbunden ist. Durch diesen Austausch von Informationen wird es möglich, die Bilddaten, die von der Kamera erfasst werden, flexibel den Erfordernissen des Fahrerassistenzsystems anzupassen. Dies bedeutet, dass die für die Funktion eines Fahrerassistenzsystems notwendigen Bilddaten an dieses übermittelt werden können.

An der Verarbeitungseinheit werden außerdem Informationen von dem damit verbundenen Fahrerassistenzsystem empfangen, die die Art des Fahrerassistenzsystems angeben. Diese Informationen beinhalten insbesondere Angaben über den Bildwinkel und den Bildausschnitt, die für die Funktion des Fahrerassistenzsystems benötigt werden. Vorzugsweise wird eine sehr weitwinklig abbildende Kamera eingesetzt, sodass alle Winkel und Ausschnitte, die von Fahrerassistenzsystemen benötigt werden könnten, abgedeckt sind. Aufgrund des Erhalts von Informationen betreffend der Art des Fahrerassistenzsystems kann die Verarbeitungseinheit die geeignete Verarbeitungsart auswählen.

Der Austausch zwischen dem Fahrerassistenzsystem und der Verarbeitungseinheit kann auf verschiedene Arten erfolgen. Zum einen kann das Fahrerassistenzsystem eine Anfrage bezüglich bestimmter Bilddaten an die Verarbeitungseinheit leiten, die daraufhin die entsprechenden Bilddaten an das Fahrerassistenzsystem übermittelt. Alternativ kann eine Information über die Art des Fahrerassistenzsystems an die Verarbeitungseinheit übermittelt werden, die daraufhin die für dieses Fahrerassistenzsystem notwendigen Bilddaten zurück überträgt. Die erfindungsgemäße Kameravorrichtung kann daher flexibel verwendet werden und vielseitig zum Einsatz gelangen.

Gemäß einer Ausführungsform stellt die Verarbeitung der Bilddaten in der Verarbeitungseinheit ein Auswählen eines Bildausschnitts aus dem mit der Kamera erfassbaren Bildwinkel dar. Durch das Vorsehen einer Verarbeitungseinheit wird es möglich, gezielt Bildausschnitte aus dem von der Kamera erfassten Bildwinkel auszuwählen. Somit ist es beispielsweise möglich, lediglich Bilddaten bezüglich des rechten oder des linken Randes des erfassten Bildwinkels an das Fahrerassistenzsystem zu übermitteln. Die so ausgewählten Bilddaten können dann in dem Fahrerassistenzsystem weiter verarbeitet werden. Dieses Auswählen verschiedener Bildausschnitte aus dem gesamten Bildwinkel kann auch als elektronisches Schwenken der Kamera bezeichnet werden. Eine Bewegung der eigentlichen Kamera ist hierfür allerdings nicht notwendig. Auf diese Weise wird es möglich, sehr schnell und sehr genau Bilddaten, die für das jeweilige Fahrerassistenzsystem notwendig sind, an dieses zu übermitteln.

Gemäß einer weiteren Ausführungsform kann zusätzlich oder alternativ die Verarbeitung der Bilddaten eine Vergrößerung eines Bildausschnitts aus dem mit der Kamera erfassbaren Bildwinkel darstellen. Auch hierbei kann aufgrund des Austauschs von Informationen zwischen dem Fahrerassistenzsystem und der Verarbeitungseinheit die gewünschte Vergrößerung, die für die Funktion des Fahrerassistenzsystems notwendig ist, genau eingestellt werden. Diese Vergrößerung kann ohne eine Veränderung der Kamera als solches erfolgen. Im Vergleich zu einem mechanischen/optischen Vergrößern bzw. Zoomen können bei diesem sogenannten elektronischen Zoomen auch Bereiche, die nicht im Zentrum des Bildwinkels liegen, vergrößert werden.

Vorzugsweise ist die Verarbeitungseinheit mit mindestens zwei Fahrerassistenzsystemen verbunden. Da die Verarbeitungseinheit erfindungsgemäß mit einer einzigen Kamera verbunden ist, können bei dieser Ausführungsform die Vorteile der Erfindung besonders vorteilhaft genutzt werden. Die mindestens zwei Fahrerassistenzsysteme können unterschiedliche Anforderungen bezüglich des Bildwinkels und des Bildausschnitts aufweisen. Durch die Möglichkeit des wahlweisen elektronischen Schwenkens und/oder elektronischen Zoomens der Kamera können die für das jeweilige Fahrerassistenzsystem notwendigen Bilddaten an dieses übermittelt werden. Gegenüber dem Stand der Technik, in dem für Fahrerassistenzsysteme mit unterschiedlichen Anforderungen an die Bilddaten verschiedene Kameras eingesetzt werden mussten, die für den jeweiligen Zweck optimiert waren, ist es mit der erfindungsgemäßen Kameravorrichtung möglich, mehrere Fahrerassistenzsysteme über eine einzige Kamera mit den notwendigen Bilddaten zu versorgen.

Die Kamera, die in der erfindungsgemäßen Kameravorrichtung eingesetzt wird, stellt vorzugsweise eine Infrarotkamera, eine CCD-Kamera oder eine CMOS-Kamera dar. Mit diesen Kameras wird es möglich, beispielsweise auch bei Nacht die entsprechenden Bilddaten zu erfassen.

Die vorliegende Erfindung wird im Folgenden anhand der beiliegenden Figuren, die ein mögliches Ausführungsbeispiel der erfindungsgemäßen Kameravorrichtung zeigen, genauer erläutert, wobei
- Figur 1:: einen schematischen Aufbau einer Ausführungsform einer erfindungsgemäßen Kameravorrichtung zeigt,
- Figur 2:: eine schematische Darstellung des Bildwinkels, der mit der Kamera erfasst werden kann, zeigt, und
- Figur 3:: eine schematische Darstellung von Bilddaten, die mit der erfindungsgemäßen Kameravorrichtung an das Fahrerassistenzsystem übermittelt werden können, zeigt.

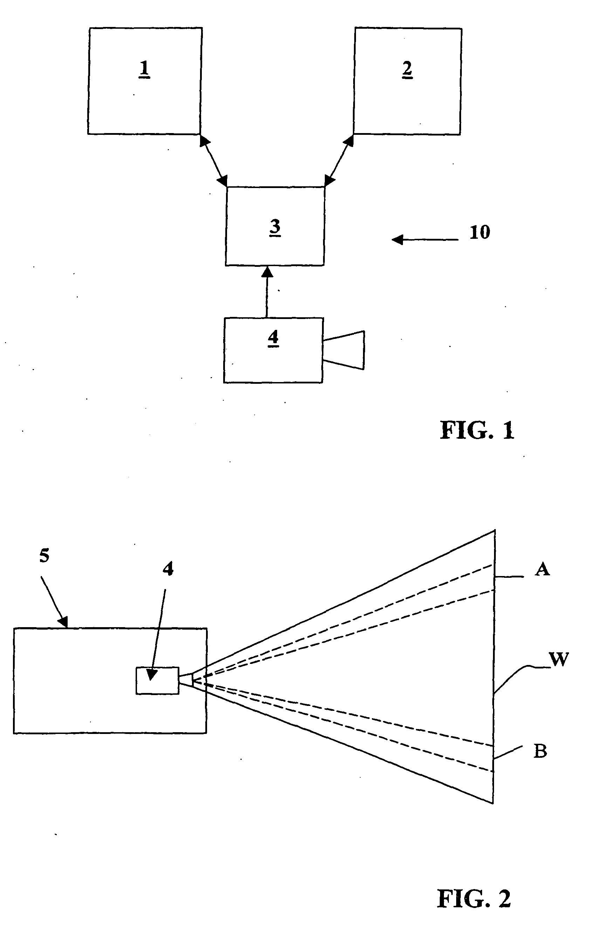

In Figur 1 ist eine erfindungsgemäße Kameravorrichtung 10 dargestellt. Diese umfasst ein erstes Fahrerassistenzsystem 1 und ein zweites Fahrerassistenzsystem 2. Diese Fahrerassistenzsysteme sind mit einer Verarbeitungseinheit 3 verbunden, die wiederum mit einer Kamera 4 verbunden ist. Die Verbindung der Fahrerassistenzsysteme 1 und 2 mit der Verarbeitungseinheit 3 stellen Verbindungen für eine bidirektionale Kommunikation dar. Dies bedeutet, dass Daten und/oder Informationen in beide Richtungen übermittelt werden können. Die Verbindung zwischen der Kamera 4 und der Verarbeitungseinheit 3 hingegen erlaubt in der dargestellten Ausführungsform lediglich eine Übermittlung von Bilddaten von der Kamera 4 auf die Verarbeitungseinheit 3.

Das Fahrerassistenzsystem 1 kann beispielsweise ein Nachtsichtsystem darstellen, bei dem dem Fahrer auch bei Dunkelheit eine gute Wiedergabe des voranliegenden Straßenverlaufs, einschließlich von Kurven, beispielsweise auf einem Bildschirm angezeigt wird, um ihm ein rechtzeitiges Erkennen von Gefahren zu ermöglichen. Um den Kurvenverlauf einer Straße Rechnung tragen zu können, sind für ein solches Fahrerassistenzsystem 1 bei einer Rechtskurve beispielsweise nur die Bilddaten des rechten Randausschnitts eines Bildwinkels, der mit einer feststehenden Kamera aufgenommen werden kann, notwendig.

Das Fahrerassistenzsystem 2 kann beispielsweise ein Lane-Departure-Warning-System darstellen. Für ein solches Fahrerassistenzsystem 2 sind, im Gegensatz zum Fahrerassistenzsystem 1 beide Randbereiche eines Bildwinkels von Bedeutung, um die Lage des Fahrzeugs zwischen Markierungen auf der Straße überwachen zu können.

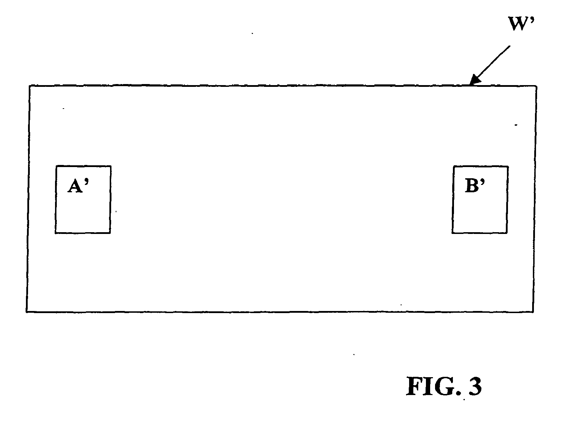

Wie in Figur 2 gezeigt, ist die Kamera 4 an einem Fahrzeug 5 vorzugsweise im vorderen Bereich des Fahrzeugs 5 angebracht. Die Anbringung der Kamera 4 erfolgt erfindungsgemäß in einer starren Ausführung, da die Kamera 4 kann nicht bewegt werden braucht. Wird eine weitwinklig abbildende Kamera gewählt, so kann von dieser der in Figur 2 angedeutete Bildwinkel mit einer Breite W abgedeckt werden. Durch die Kamera 4 wird somit eine Abbildung in Form von Bilddaten, wie in Figur 3 schematisch als W' dargestellt, erzeugt. Informiert das Fahrerassistenzsystem 1 die Verarbeitungseinheit 3 bei einer Rechtskurve beispielsweise darüber, dass Bilddaten bezüglich des rechten Bildausschnitts B benötigt werden, so übermittelt die Verarbeitungseinheit aus den von der Kamera 4 erhaltenen Daten W' die Daten B' und stellt diese dem Fahrerassistenzsystem 1 zur Verfügung. Zusätzlich kann von der Verarbeitungseinheit 3 der Bildausschnitt B' vergrößert werden, um dem Fahrer ein leichteres Erkennen auf einem Display zu ermöglichen. Anstelle einer Vergrößerung des Bildausschnitts oder zusätzlich kann die Verarbeitungseinheit eine unterschiedliche Nachbearbeitung des Bildausschnitts vornehmen, je nachdem, ob eine Optimierung für das menschliche Auge oder eine Optimierung für eine Bildverarbeitung benötigt wird.

Gleichzeitig kann von dem Fahrerassistenzsystem 2 eine Information an die Bildverarbeitungseinheit 3 übermittelt werden, dass Bilddaten bezüglich beider Randbereiche A, B des Bildwinkels W benötigt werden. Die Verarbeitungseinheit kann daraufhin die Bilddaten A' und B' an das Fahrerassistenzsystem 2 leiten.

Um den Unterschied gegenüber dem Stand der Technik zu verdeutlichen, sind in Figur 2 mit gestrichelten Linien die Bildwinkel angedeutet, die zur Erfassung der Bilddaten bezüglich der Bildausschnitte A und B ohne die erfindungsgemäße Kameravorrichtung, an zwei Kameras eingestellt werden müssten. Mit der vorliegenden Erfindung hingegen können diese Bilddaten mit einer einzigen Kamera 4 erfasst und mittels sogenanntem elektronischen Schwenken an die jeweiligen Fahrerassistenzsysteme übermittelt werden.

Die vorliegende Erfindung ist nicht auf die dargestellte Ausführungsform der Kameravorrichtung beschränkt.

Bei der erfindungsgemäßen Kameravorrichtung ist es auch möglich, dass der Austausch zwischen dem Fahrerassistenzsystem und der Verarbeitungseinheit nicht kontinuierlich erfolgt. So kann beispielsweise einmalig, z. B. beim Aktivieren des Fahrerassistenzsystems, die Information über die Art des Fahrerassistenzsystems an die Verarbeitungseinheit geleitet werden. Stellt das Fahrerassistenzsystem ein Lane-Departure-Warning-System dar, so ist es für die Verarbeitungseinheit ausreichend, diese Information einmalig zu erhalten, da der Bildausschnitt, der für ein solches Fahrerassistenzsystem benötigt wird, feststeht.

Als Fahrerassistenzsysteme, die in der erfindungsgemäßen Kameravorrichtung Anwendung finden können, kommen sämtliche Fahrerassistenzsysteme in Betracht, die für Ihre Funktion Bilddaten bezüglich der Fahrzeugumgebung benötigen. Neben den bereits erwähnten Lane-Departure-Warning-Systemen und Nachtsichtsystemen können somit beispielsweise auch Heading-Control- oder auch Adaptive-Cruise-Control-Systeme eingesetzt werden.

Die Verarbeitungseinheit der erfindungsgemäßen Kameravorrichtung muss kein separates Bauteil darstellen. Diese kann vielmehr in der Kamera integriert sein und dort beispielsweise in Form eines Programms vorliegen. Auch das Einbeziehen der Verarbeitungseinheit in das Fahrerassistenzsystem liegt im Rahmen der vorliegenden Erfindung. In diesem Fall ist für jedes Fahrerassistenzsystem eine separate Verarbeitungseinheit vorzusehen. Diese Verarbeitungseinheiten sind dann wiederum mit einer einzigen gemeinsamen Kamera verbunden.

Mit der erfindungsgemäßen Kameravorrichtung wird eine Möglichkeit geschaffen, einen oder auch mehrere Bildausschnitte aus einem Bildwinkel für Fahrerassistenzsysteme zur Verfügung zu stellen. Diese einen oder mehreren Bildausschnitte können zusätzlich vergrößert sein. Auch die Übermittlung der Bilddaten des gesamten von der Kamera erfassten Bildwinkels ist erfindungsgemäß möglich. In diesem Fall beschränkt sich die Verarbeitung in der Verarbeitungseinheit auf ein Weiterleiten der Bilddaten, die von der Kamera erfasst wurden. Die Übermittlung von Bilddaten bezüglich mehrerer voneinander beabstandeter Bildausschnitte kann an ein einziges Fahrerassistenzsystem erfolgen. Dies ist beispielsweise bei einem Lane-Departure-Waming-System von Nutzen, da für dieses Fahrerassistenzsystem nur noch eine Kamera benötigt wird.

Obwohl im Vorstehenden im Wesentlichen von der Auswahl von Bildausschnitten im rechten und linken Randbereich gesprochen wurde, ist es mit der erfindungsgemäßen Vorrichtung auch möglich, Bilddaten eines Bildausschnitts, der sich in einer Ecke des Bildwinkels befindet, oder an einer anderen Stelle innerhalb des Bildwinkels liegt, zu übermitteln. Mit der Kameravorrichtung kann somit ein elektronisches Schwenken der Kamera in horizontaler sowie in vertikaler Richtung ermöglicht werden.

Weiterhin kann mit der erfindungsgemäßen Kameravorrichtung realisiert werden, dass sich der Bildwinkel automatisch der Fahrgeschwindigkeit anpasst. Dies kann durch den Austausch von Informationen zwischen dem Fahrerassistenzsystem und der Verarbeitungseinheit erreicht werden. Der Vorteil dieses automatischen Anpassens liegt darin, dass, beispielsweise bei Nachtsichtsystemen, ein Fahrer, der langsam fährt, über die Objekte im direkten Fahrzeugumfeld informiert wird. Je schneller der Fahrer fährt, desto weiter voraus richtet er seinen Blick. Durch ein elektronisches Heranzoomen kann dieser Blickänderung mit der Kameravorrichtung Rechnung getragen werden. Zu dem sind bei einer höheren Geschwindigkeit die zu bewältigenden Kurvenradien größer, sodass eine Seiteninformation, d. h. Bilddaten im Randbereich des Bildwinkels, weniger von Bedeutung ist. Auch diesem Phänomen kann mit der Kameravorrichtung Rechnung getragen werden, in dem der Zentralbereich des Bildwinkels herangezoomt wird. Eine Abbildung auf einem Display, die mittels einer solchen Ausgestaltung der Kameravorrichtung erzeugt wurde, entspricht zu jeder Geschwindigkeit besser dem jeweiligen Eindruck des Fahrers. Dieser muss das Bild daher nicht aufwendig mit seinem geistigen Bild zur Deckung bringen. Dadurch kann die Fahrerbelastung gesenkt werden und auch die Blickabwendungsdauer wird erniedrigt. Somit kann mit der erfindungsgemäßen Kameravorrichtung eine erhöhte Fahrtsicherheit gewährleistet werden.

Weiterhin wird der Informationsgehalt bezüglich fahrerrelevanter Daten deutlich erhöht. Gefahren werden somit mit größerer Wahrscheinlichkeit in der Abbildung auf dem Display angezeigt, was erneut zu einer Erhöhung der Fahrsicherheit führt.

Mit der erfindungsgemäßen Kameravorrichtung ist es daher möglich, eine Vorrichtung zu schaffen, die einfach herzustellen und zu handhaben ist und insbesondere auch für mehrere Fahrerassistenzsysteme flexibel eingesetzt werden kann. Insbesondere können mehrere Fahrerassistenzsysteme auch mit verschiedenen Anforderungen bezüglich des erforderlichen Bildausschnitts und Bildwinkels von einer einzigen Kamera mit den benötigten Bilddaten versorgt werden.

## Patentansprüche

1. Kameravorrichtung für ein Fahrzeug umfassend eine Kamera (4) zur Erfassung von Bilddaten eines Teils der Fahrzeugumgebung, eine Verarbeitungseinheit (3) zum Verarbeiten von Bilddaten und mindestens ein Fahrerassistenzsystem (1, 2), wobei die Kamera (4) feststehend an dem Kraftfahrzeug (5) befestigt ist und das mindestens eine Fahrerassistenzsystem (1, 2) zum Austausch von Informationen mit der Verarbeitungseinheit (3) verbunden ist, wobei die Informationen von der Kamera erfasste und von der Verarbeitungseinheit verarbeitete Bilddaten umfassen,
**dadurch gekennzeichnet,**
**dass** die Verarbeitungseinheit (3) Informationen von dem damit verbundenen Fahrerassistenzsystem (1, 2) empfängt, die die Art des Fahrerassistenzsystems (1, 2) angeben.

2. Kameravorrichtung nach Anspruch 1, **dadurch gekennzeichnet, dass** die Verarbeitung der Bilddaten in der Verarbeitungseinheit (3) ein Auswählen eines Bildausschnitts (A, B) aus dem mit der Kamera (4) erfassbaren Bildwinkel (W) darstellt.

3. Kameravorrichtung nach Anspruch 1 oder 2, **dadurch gekennzeichnet, dass** die Verarbeitung ein elektronisches Zoomen eines Bildausschnitts (A, B) aus dem mit der Kamera (4) erfassbaren Bildwinkel (W) darstellt.

4. Kameravorrichtung nach einem der Ansprüche 1 bis 4, **dadurch gekennzeichnet, dass** mindestens zwei Fahrerassistenzsysteme (1, 2) mit der Verarbeitungseinheit (3) verbunden sind.

5. Kameravorrichtung nach einem der Ansprüche 1 bis 5, **dadurch gekennzeichnet, dass** die Kamera eine IR-Kamera, eine CCD- oder eine CMOS-Kamera darstellt.

6. Kameravorrichtung nach einem der Ansprüche 1 bis 6, **dadurch gekennzeichnet, dass** der ausgewählte Bildausschnitt (A, B) nicht konzentrisch zum mit der Kamera (4) erfassbaren Bildwinkel (W) angeordnet ist.

## Claims

1. Camera device for a vehicle comprising a camera (4) for recording image data of part of the surroundings of a vehicle, a processing unit (3) for processing image data and at least one driver assistance system (1,2), whereby the camera (4) is fixedly attached to a vehicle (5) and at least one driver assistance system (1,2) is connected for the exchange of information with the processing unit (3), whereby the information comprises image data recorded by the camera and processed by the processing unit,
**characterized in that,**
the processing unit (3) receives information, from the driver assistance system (1, 2) that is connected to it, that specifies the type of driver assistance system (1, 2) concerned.

2. Camera device in accordance with claim 1, **characterized in that** processing of the image data in the processing unit (3) represents a selection of an image section (A, B) from an image taken at angles (W) that the camera can record at.

3. Camera device in accordance with claims 1 or 2, **characterized in that** processing represents an electronic zoom on a section (A, B) of an image taken from an image angle that can be recorded at with the camera (4).

4. Camera device in accordance with claims 1 to 4, **characterized in that** at least two driver assistance systems (1, 2) are connected to the processing unit (3).

5. Camera device in accordance with claims 1 to 5, **characterized in that** the camera constitutes an IR, a CCD or a CMOS camera.

6. Camera device in accordance with claims 1 to 6, **characterized in that** the selected image section (A, B) is not concentric with the image angle (W) that the camera (4) records at.

## Revendications

1. Système de caméra pour un véhicule comprenant une caméra (4) pour acquérir des données d'image d'une partie de l'environnement du véhicule, une unité de traitement (3) pour le traitement de données d'image et au moins un système d'assistance au conducteur (1, 2), dans lequel la caméra (4) est fixée rigidement au véhicule (5) et l'au moins un système d'assistance au conducteur (1, 2) etant relié à l'unité de traitement (3) pour l'échange d'informations, les informations comprenant des données d'image acquises par la caméra et traitées par l'unité de traitement,
**caractérisé en ce que**
l'unité de traitement (3) reçoit des informations provenant du système d'assistance au conducteur (1, 2)qui lui est relié qui indiquent le type du système d'assistance au conducteur (1, 2).

2. Système de caméra selon la revendication 1, **caractérisé en ce que** le traitement des données d'image dans l'unité de traitement (3) représente un choix d'un cadrage (A, B) à partir du champ angulaire (W) détectable avec la caméra (4).

3. Système de caméra selon la revendication 1 ou 2, **caractérisé en ce que** le traitement représente un zoom électronique d'un cadrage (A, B) à partir du champ angulaire (W) détectable avec la caméra (4).

4. Système de caméra selon l'une des revendications 1 à 4, **caractérisé en ce qu'**au moins deux systèmes d'assistance au conducteur (1, 2) sont reliés à l'unité de traitement (3).

5. Système de caméra selon l'une des revendications 1 à 4, **caractérisé en ce que** la caméra représente une caméra à infrarouge, une caméra CMOS ou CCD.

6. Système de caméra selon l'une des revendications 1 à 5, **caractérisé en ce que** le cadrage sélectionné (A, B) n'est pas concentrique au champ angulaire (W) détectable avec la caméra (4).
